(19) Europäisches Patentamt
European Patent Office
Office européen des brevets

(11) **EP 2 098 671 B1**

(12) **EUROPÄISCHE PATENTSCHRIFT**

(45) Veröffentlichungstag und Bekanntmachung des Hinweises auf die Patenterteilung:
**31.07.2013  Patentblatt 2013/31**

(51) Int Cl.:
*E05F 15/20* (2006.01)       *B60R 25/00* (2013.01)
*G07C 9/00* (2006.01)

(21) Anmeldenummer: **08102249.3**

(22) Anmeldetag: **04.03.2008**

(54) **Kraftfahrzeug mit einem automatisch in eine Offen- und eine Schließstellung verstellbaren Fahrzeugteil**

Motor vehicle with a vehicle component which can automatically be adjusted to an open or closed position

Véhicule automobile doté d'une pièce de véhicule réglable automatiquement en position ouverte ou fermée

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(43) Veröffentlichungstag der Anmeldung:
**09.09.2009  Patentblatt 2009/37**

(73) Patentinhaber: **Hella KGaA Hueck & Co.**
**59552 Lippstadt (DE)**

(72) Erfinder:
• **Reimann, Martin**
  **59071, Hamm (DE)**
• **Weghaus, Ludger**
  **59556, Lippstadt (DE)**
• **Marx, Bernhard**
  **59590, Geseke (DE)**

(56) Entgegenhaltungen:
EP-A- 0 965 710        EP-A- 0 999 102
DE-A1- 19 901 364      DE-B3-102004 041 709
US-A1- 2003 095 040

**Beschreibung**

Die Erfindung betrifft ein Kraftfahrzeug nach dem Oberbegriff von Anspruch 1.

Ein derartiges Kraftfahrzeug ist aus EP 0 999 102 A2 und DE 199 01 364 A1 bekannt. Es hat ein vom Benutzer mitführbares Zugangsberechtigungsmittel, das als Transponder ausgestaltet ist und mit einer im Kraftfahrzeug befindlichen Detektionseinrichtung zusammenwirkt. Mit Hilfe der Detektionseinrichtung kann das Vorhandensein des Zugangsberechtigungsmittels in einem vorbestimmten Umgebungsbereich des Kraftfahrzeugs überprüft werden. Das Kraftfahrzeug weist außerdem einen Näherungssensor auf, der einen Teil eines Außenbereichs des Kraftfahrzeugs auf die Anwesenheit eines Benutzers überwacht. Gelangt eine Person in den Umgebungsbereich, weckt der Näherungssensor die Detektionseinrichtung auf, woraufhin ein Kommunikations-Frage-Antwort-Dialog zwischen der Detektionseinrichtung und dem Zugangsberechtigungsmittel eingeleitet wird. Nur wenn das Zugangsberechtigungsmittel in dem Umgebungsbereich detektiert wird, wird der Zugang zum Kraftfahrzeug freigegeben. Die Detektionseinrichtung ist zu diesem Zweck über eine Steuereinrichtung mit den Türschlössern des Kraftfahrzeugs verbunden. Der Näherungssensor kann jedoch auch durch andere Personen als den berechtigten Benutzer des Kraftfahrzeugs ausgelöst werden. Wenn das Kraftfahrzeug an einem Ort abgestellt wird, an dem viele Personen in den Umgebungsbereich des Kraftfahrzeugs gelangen können, wird der Kommunikations-Frage-Antwort-Dialog entsprechend häufig in Gang gesetzt. Die Detektionseinrichtung weist dann eine entsprechend hohe durchschnittliche Stromaufnahme auf.

Aus US 2003/0095040 A1 ist ein Kraftfahrzeug mit einer Alarmanlage bekannt. Das Kraftfahrzeug weist ein vom Benutzer mitführbares Zugangsberechtigungsmittel auf, das mit einer im Kraftfahrzeug befindlichen Detektionseinrichtung zusammenwirkt. Mit Hilfe der Detektionseinrichtung kann das Vorhandensein des Zugangsberechtigungsmittels in einem vorbestimmten Umgebungsbereich des Kraftfahrzeugs überprüft werden. Das Kraftfahrzeug weist außerdem einen Näherungssensor auf, der einen Teil eines Außenbereichs des Kraftfahrzeugs auf Objekte überwacht, die sich dem Kraftfahrzeug annähern. Wenn die Annäherung eines Objekts festgestellt wird, aktiviert der Näherungssensor die Detektionseinrichtung. Dies überprüft dann, ob sich das Zugangsberechtigungsmittel in dem vorbestimmten Umgebungsbereich des Kraftfahrzeugs befindet. Falls das nicht der Fall ist, wird ein Alarm ausgelöst, der anzeigt, dass sich möglicherweise eine unautorisierte Person in der Nähe des Kraftfahrzeugs befindet.

Aus EP 0 965 710 A2 ist ein Kraftfahrzeug bekannt, das eine Großbereichs-Identifikations-Anforderungseinrichtung zum Senden eines Identifikations-Anforderungssignals zu einem tragbaren Sender, eine Identifikations-Verifizierungseinrichtung zur Durchführung einer Verifikation der empfangenen Antwortidentifikation, und eine Bereichsschalteinrichtung zur Aktivierung einer Erfassungseinrichtung, deren Erfassungsbereich kleiner als der größere Bereich ist, aufweist. Dabei stellt der Großbereich einen Erfassungsbereich mit einer relativ geringen Erfassungsgenauigkeit und der kleinere Bereich stellt einen Erfassungsbereich mit großer Erfassungsgenauigkeit dar. Entsprechend wird für den Betrieb der Kleinbereichs-Erfassungseinrichtung ein größerer elektrischer Strom benötigt als für den Betrieb der Goßbereichs-Erfassungseinrichtung. Die den kleineren Bereich verwendende Erfassungseinrichtung wird aktiviert, nachdem bestätigt wurde, dass ein Benutzer des Kraftfahrzeugs, der den tragbaren Sender mit sich führt, den Großbereich betreten hat. Die den kleineren Bereich verwendende Erfassungseinrichtung steuert eine Türverriegelung.

Aus DE 10 2004 0471 709 B3 ist ferner ein Kraftfahrzeug bekannt, das mehrere Türen und eine Heckklappe hat. Die Heckklappe des Fahrzeugs hat eine Betätigungseinrichtung, mit der sie aufgrund eines Öffnungsbefehls aus ihrer Schließstellung automatisch in die Offenstellung verstellbar ist. Das Kraftfahrzeug hat einem vom Benutzer mitführbares Zugangsberechtigungsmittel, wie z.B. einen intelligenten Fahrzeugschlüssel oder einer Keycard, das mit einer im Kraftfahrzeug befindlichen Detektionseinrichtung zusammenwirkt. Mit Hilfe der Detektionseinrichtung kann das Vorhandensein des Zugangsberechtigungsmittels in einem vorbestimmten Umgebungsbereich des Kraftfahrzeugs überprüft werden. Zum Empfangen eines Öffnungswunschs des Fahrzeugbenutzers hat das Kraftfahrzeug einen Näherungssensor, der im Heckbereich des Kraftfahrzeugs unterhalb eines Stoßfängers zwei Sensorelemente aufweist. Diese sind derart angeordnet, dass der Benutzer durch Schwenken des Fußes im Bereich zwischen Fahrzeugaufbau und Fahrbahnoberfläche den Näherungssensor berührungslos zum Schalten veranlassen kann. Der Näherungssensor und die Detektionseinrichtung stehen derart mit einer Steuereinrichtung in Steuerverbindung, dass der Näherungssensor eingeschaltet wird, wenn die Detektionseinrichtung das Vorhandensein des Zugangsberechtigungsmittels detektiert. Wenn der Näherungssensor schaltet und gleichzeitig die Detektionseinrichtung das Vorhandensein des Zugangsberechtigungsmittels detektiert, wird das Fahrzeugteil mit Hilfe der Betätigungseinrichtung automatisch geöffnet. Ein Fahrzeugbenutzer, der aufgrund eines zu tragenden Gegenstands beide Hände belegt hat, kann also mit, Hilfe des Näherungssensors den automatischen Öffnungsvorgang der Heckklappe einleiten, ohne den Gegenstand abstellen zu müssen. Das Kraftfahrzeug hat jedoch den Nachteil, dass die Detektionseinrichtung auch bei abgestelltem Kraftfahrzeug ständig eingeschaltet sein muss, damit das Fahrzeugteil vom Benutzer jederzeit berührungslos geöffnet werden kann. Die Batterie des Kraftfahrzeugs entlädt sich deshalb relativ schnell. Es ist zwar bereits bekannt, in einem Kraftfahrzeug bestimmte elektrische Komfortkomponenten abzuschalten, wenn das Kraftfahrzeug innerhalb einer vorbestimmten Zeitdauer nicht benutzt wird. Für den Benutzer des Kraftfahrzeugs bedeutet dies jedoch eine Komforteinbuße, da die entsprechenden Komponenten nach Ablauf der Zeitdauer zunächst nicht genutzt werden können.

Es besteht deshalb die Aufgabe ein Kraftfahrzeug der eingangs genannten Art zu schaffen, bei dem die für das berührungslose Auslösen der Betätigungseinrichtung benötigten elektrischen Komponenten einen geringen Stromverbrauch ermöglichen.

Diese Aufgabe wird mit den Merkmalen des Anspruchs 1 gelöst. In vorteilhafter Weise ermöglicht der kapazitive Näherungssensor im Vergleich zu einem entsprechenden optischen Näherungssensor oder einem Näherungssensor, der mit Ultraschall oder Radarstrahlung arbeitet, einen sehr geringen Stromverbrauch. Zwar ist der Stromverbrauch der Detektionseinrichtung noch relativ groß, jedoch wirkt sich dies in der Praxis kaum aus, weil die Steuereinrichtung die Detektionseinrichtung erst einschaltet, nachdem der Näherungssensor die Anwesenheit des Körperteils detektiert hat. Die Detektionseinrichtung braucht deshalb jeweils nur für eine kurze Zeitdauer eingeschaltet zu sein. Der Benutzer des Kraftfahrzeugs kann die Größe des Umgebungsbereichs berührungslos individuell einstellen, indem er ein bestimmtes Bewegungsprofil an den Näherungssensor anlegt. Der jeweils eingestellte Wert wird bevorzugt in einem nichtflüchtigen Speicher abgelegt, damit er auch dann gespeichert bleibt, wenn die Fahrzeugbatterie einmal abgeklemmt oder die Stromversorgung zu der Steuereinrichtung unterbrochen sein sollte.

Vorteilhaft ist, wenn die Steuereinrichtung derart mit der Schalteinrichtung in Steuerverbindung steht, dass die Detektionseinrichtung ausgeschaltet wird, wenn der Näherungssensor die Anwesenheit des Körperteils in dem Teil des Außenbereichs nicht detektiert. Die Detektionseinrichtung ist also jeweils nur so lange in Betrieb, wie der Näherungssensor die Anwesenheit des Körperteils anzeigt. Somit ermöglichen die für das berührungslose Auslösen der Betätigungseinrichtung benötigten Einrichtungen einen noch geringere Stromaufnahme.

Bei einer anderen vorteilhaften Ausgestaltung der Erfindung steht die Steuereinrichtung derart mit der Schalteinrichtung in Steuerverbindung, dass die Detektionseinrichtung ausgeschaltet wird, wenn diese das Vorhandensein des Zugangsberechtigungsmittels in dem Umgebungsbereich nicht detektiert. Die Detektionseinrichtung wird also ausgeschaltet, sobald das Zugangsberechtigungsmittel aus dem zu überwachenden Umgebungsbereich entfernt wird.

Bei zweckmäßigen Ausführungsform der Erfindung steht die Steuereinrichtung derart mit der Schalteinrichtung und einem Zeitgeber in Steuerverbindung, dass die Detektionseinrichtung nach Ablauf einer vorbestimmten maximale Einschaltzeitdauer abgeschaltet wird.

Auch durch diese Maßnahme kann eine geringe Stromaufnahme erreicht werden.

Bei einer Weiterbildung der Erfindung weist der Näherungssensor mindestens eine mit einem Taktgeber in Steuerverbindung stehende Schaltvorrichtung auf, mittels der das Sensorelement wiederholt zum Aufladen auf eine vorbestimmte elektrische Spannung mit einer elektrischen Spannungsquelle und jeweils danach zum Entladen des Sensorelements mit einem Strom-Spannungskonverter verbindbar ist, wobei der Strom-Spannungskonverter einen Messsignalausgang zum Ausgeben eines von der im Sensorelement gespeicherten Ladung abhängigen Messsignals aufweist, und wobei der Messsignalausgang zum Auswerten des Messsignals mit der Steuereinrichtung verbunden ist. In vorteilhafter Weise ermöglicht diese Ausgestaltung des Näherungssensor nicht nur einen geringen Stromverbrauch sondern auch eine weitgehend störungsfreie berührungslose Detektion des Körperteils des Benutzers. Die Steuereinrichtung kann z.B. eine Vergleichseinrichtung zum Vergleichen der Messspannung mit einem Referenz- oder Schwellenwert und/oder Mittel zum Bestimmen der Anstiegsgeschwindigkeit der Messspannung aufweisen.

Vorteilhaft ist, wenn der Strom-Spannungskonverter eine Reihenschaltung, bestehend aus einem Kondensator und einem ohmschen Widerstand aufweist, die mit Hilfe der Schaltvorrichtung zu dem Sensorelement parabel geschaltet werden kann. Der Stromkonverter ermöglich dann einen einfachen und kostengünstigen Aufbau.

Vorteilhaft ist, wenn der Näherungssensor mehrere voneinander beabstandete Sensorelemente aufweist, mit denen jeweils das Körperteil des Benutzers berührungslos detektierbar ist. Die Steuereinrichtung kann dann derart ausgestaltet sein, dass sie die Richtung, in der das Körperteil in dem zu überwachenden Teil des Außenbereichs des Kraftfahrzeugs relativ zu diesem bewegt wird, anhand des zeitlichen Verläufe der Messsignale der einzelnen Sensorelemente ermitteln kann und das Öffnen und/oder Schließen des Fahrzeugteils nur dann einleitet, wenn die ermittelte Richtung mit einer vorbestimmten Richtung übereinstimmt. Dadurch kann ein versehentliches Öffnen und/oder Schließen des Fahrzeugteils weitestgehend vermieden werden.

Nachfolgend sind Ausführungsbeispiele der Erfindung anhand der Zeichnung näher erläutert. Es zeigt:

Fig. 1 eine schematische Darstellung eines Kraftfahrzeugs,

Fig. 2 ein Blockschaltbild,

Fig. 3 ein Schaltbild eines Kanals eines ersten Ausführungsbeispiels eines mehrka- naligen kapazitiven Näherungssensors,

Fig. 4 eine graphische Darstellung der elektrischen Spannung an einem Kondensa- tor des in Fig.

3 gezeigten Ausführungsbeispiels, wobei auf der Abszisse die Zeit in Taktzyklen und auf der Ordinate die elektrische Spannung aufgetragen sind, und

Fig.5 ein Schaltbild eines Kanals eines zweiten Ausführungsbeispiels eines kapazitiven Näherungssensors.

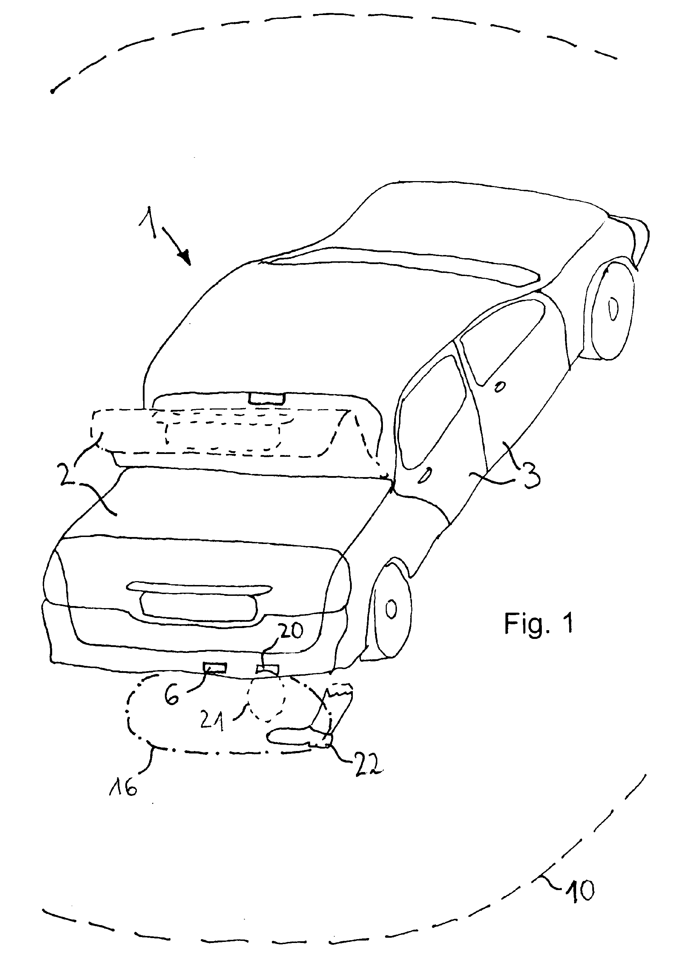

Ein in Fig. 1 im Ganzen mit 1 bezeichnetes Kraftfahrzeug hat ein als Heckklappe ausgestaltetes erstes Fahrzeugteil 2, das zwischen einer Offen- und eine Schließstellung verstellbar ist und einen Zugang zu einem in der Zeichnung nicht näher dargestellten Laderaum ermöglicht. Außerdem weist das Kraftfahrzeug 2 mehrere als Türen ausgestaltete zweite Fahrzeugteile 3 auf, über die der Innenraum des Kraftfahrzeugs 1 zugänglich ist.

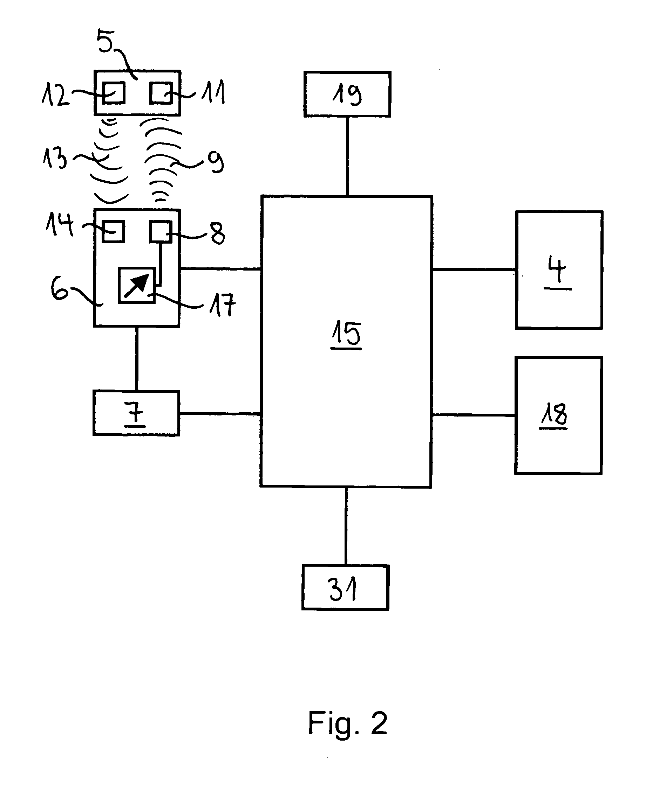

Zum Ver- und Entriegeln der in Schließstellung befindlichen ersten und zweiten Fahrzeugteile 2, 3 hat das Kraftfahrzeug 2 eine in Fig. 2 nur schematisch dargestellte Ent-/Verriegelungseinrichtung 4. Diese weist für jedes zu verriegelnde bzw. entriegelnde Fahrzeugteil 2, 3 jeweils einen Stellmotor auf, mit dessen Hilfe in an sich bekannter Weise ein jeweils an dem betreffenden Fahrzeugteil 2, 3 angeordneter Riegel zwischen einer Verriegelungsstellung und einer Offenstellung motorisch verstellbar ist. Mit Hilfe der Ent-/Verriegelungseinrichtung 4 können die Fahrzeugteile 2, 3 zentral ver- bzw. entriegelt werden.

Das Kraftfahrzeug 1 hat mindestens ein Zugangsberechtigungsmittel 5, das vom Benutzer des Kraftfahrzeugs 1 beispielsweise in der Tasche mitgeführt werden kann. Das Zugangsberechtigungsmittel 5 kann zum Beispiel ein Fahrzeugschlüssel oder eine Keycard sein, der bzw. die drahtlos mit einer im Kraftfahrzeug angeordneten Detektionseinrichtung 6 zusammenwirkt. Die zweiten Fahrzeugteile weisen Türgriffe auf, an denen in der Zeichnung nicht näher dargestellte Mikroschalter angeordnet sind, die beim Betätigen der Türgriffe ein Einschaltsignal an eine Schalteinrichtung 7 übermitteln, welches das Einschalten der Detektionseinrichtung 6 veranlasst.

Die Detektionseinrichtung 6 hat einen ersten Sender 8 zur Aussendung eines ersten elektromagnetischen Wechselfelds 9. Wenn sich das Zugangsberechtigungsmittel 5 innerhalb eines in Fig. 2 strichliniert dargestellten ersten Umgebungsbereichs 10 der Detektionseinrichtung 6 befindet, empfängt ein in dem Zugangsberechtigungsmittel 5 angeordneter erster Empfänger 11 das erste elektromagnetische Wechselfeld 9. Sobald dieses empfangen wird, sendet ein in das Zugangsberechtigungsmittel 5 integrierter zweiter Sender 12 ein zweites elektromagnetisches Wechselfeld 13 aus, das sich bezüglich seiner Frequenz vorzugsweise von der Frequenz des ersten elektromagnetischen Wechselfelds 9 unterscheidet. Das zweite elektromagnetische Wechselfeld 13 wird von einem in der Detektionseinrichtung 6 angeordneten zweiten Empfänger 14 empfangen, woraufhin diese ein Steuersignal erzeugt, welches die Anwesenheit des Zugangsberechtigungsmittels 5 in dem ersten Umgebungsbereich 10 anzeigt. Befindet sich das Zugangsberechtigungsmittel 5 außerhalb des ersten Umgebungsbereichs 10, empfängt der erste Empfänger 11 das erste elektromagnetische Wechselfeld 9 nicht oder mit zu geringer Signalstärke. In diesem Fall sendet der zweite Sender 12 das zweite elektromagnetische Wechselfeld 13 nicht aus.

Wie in Fig. 2 erkennbar ist, ist die Detektionseinrichtung 6 über eine Steuereinrichtung 15 mit der Ent-/Verriegelungseinrichtung 4 verbunden. Wenn die Detektionseinrichtung 6 feststellt, dass das Zugangsberechtigungsmittel 5 in dem ersten Umgebungsbereich 10 vorhanden ist, übermittelt sie das Steuersignal an die Steuereinrichtung 15. Diese erzeugt dann ein Freigabesignal für das Entriegeln der Ent-/Verriegelungseinrichtung 4. In Abhängigkeit von dem Freigabesignal werden die Stellmotoren der Ent-/Verriegelungseinrichtung 4 positioniert. In Fig. 1 ist erkennbar, dass der erste Umgebungsbereich 10 so groß gewählt ist, dass es das erste Fahrzeugteil 2 und alle zweiten Fahrzeugteile 3 umgrenzt.

Sobald das Zugangsberechtigungsmittel 5 aus dem ersten Umgebungsbereich 10 entfernt wird, wird die Ent-/Verriegelungseinrichtung 4 verriegelt und die Detektionseinrichtung 6 wird über die Schalteinrichtung 7 abgeschaltet.

Mit Hilfe der Detektionseinrichtung 6 kann außerdem überprüft werden, ob das Zugangsberechtigungsmittel 5 in einem in Fig. 1 strichliniert dargestellten zweiten Umgebungsbereich 16 der Detektionseinrichtung 6 angeordnet ist. Der zweite Umgebungsbereich 16 ist kleiner als der erste Umgebungsbereich 10 und ist vollständig in diesem enthalten. In Fig. 1 ist erkennbar, dass der zweite Umgebungsbereich 16 dicht an dem ersten Fahrzeugteil 2 angeordnet ist. Die Überprüfung, ob das Zugangsberechtigungsmittel 5 in dem zweiten Umgebungsbereich 16 anwesend ist, erfolgt in entsprechender Weise wie die Überprüfung, ob das Zugangsberechtigungsmittel 5 in dem ersten Umgebungsbereich 10 anwesend ist, wobei jedoch bei der zuerst genannten Überprüfung die Sendeleistung des ersten Senders 8 und/oder des zweiten Senders 12 kleiner gewählt wird als bei der zuletzt genannten Überprüfung. Zu diesem Zweck kann die Detektionseinrichtung 6 eine mit dem ersten Senders 8 verbundene Stelleinrichtung 17 zum Verändern der Sendeleistung des ersten Senders 8 aufweisen.

Das erste Fahrzeugteil 2 kann mit Hilfe einer Betätigungseinrichtung 18 automatisch zwischen der Offenstellung und der Schließstellung verschwenkt werden. Damit der Fahrzeugbenutzer seinen Wunsch, das erste Fahrzeugteil 2 zu öffnen und/oder zu schließen, berührungslos an die Betätigungseinrichtung 18 übermitteln kann, hat das Kraftfahrzeug 1 einen Näherungssensor 19, der im Bereich des hinteren Stoßfängers eine Sensoranordnung 20 mit mehreren kapazitiven Sensorelementen 24 aufweist. Die Sensorelemente 24 können beispielsweise streifenförmig ausgestaltet und parallel zueinander angeordnet sein. Sie sind bevorzugt auf die Innenseite des Stoßfängers aufgebracht.

Mit Hilfe dieser Sensoranordnung 20 wird ein in Fig. 1 punktiert umrandeter Teil des Außenbereichs 21 des Kraftfahrzeugs 1 auf die Anwesenheit eines Körperteils 22, wie z.B. eines Fußes oder Beins, des Fahrzeugbenutzers überwacht. Durch Einbringen des Körperteils 22 in den überwachten Teil des Außenbereichs 21 kann der Näherungssensor 19 betätigt werden. Durch das Auslösen des Näherungssensors 19 wird die Detektionseinrichtung 6 eingeschaltet bzw. aus einer Ruhestellung mit reduzierter Stromaufnahme in eine Betriebsstellung umgeschaltet. Der Näherungssensor 19 ist zu diesem Zweck über die Steuereinrichtung 15 mit der Schalteinrichtung 7 verbunden.

Die Steuereinrichtung 15 erzeugt ein das Verstellen des ersten Fahrzeugteils 2 auslösendes Betätigungssteuersignal, wenn der Näherungssensor 19 die Anwesenheit des Körperteils 22 in dem überwachten Teil des Außenbereichs 21 und die Detektionseinrichtung 6 das Vorhandensein des Zugangsberechtigungsmittels 5 in dem zweiten Umgebungsbereich 16 detektieren.

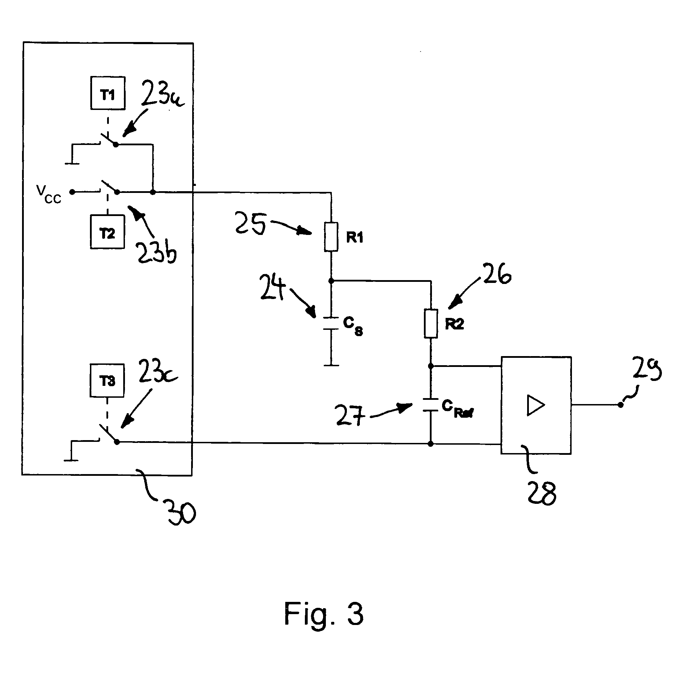

In Fig. 3 ist erkennbar, dass der Näherungssensor 19 für jedes Sensorelement 24 jeweils eine Schaltvorrichtung aufweist, die mehrere steuerbare elektronische Schaltelemente 23a, 23b, 23c umfasst. Jedes Schaltelement 23a, 23b, 23c hat jeweils einen Steuereingang, der mit einem Taktsignalausgang eines Taktgebers verbunden ist. An einem Steuereingang eines ersten Schaltelements 23a liegt ein erstes Taktsignal T1, an einem Steuereingang eines zweiten Schaltelements 23b ein zweites Taktsignal T2 und an einem Steuereingang eines dritten Schaltelements 23c ein drittes Taktsignal T3 an.

Ein erster Anschluss eines ersten Widerstands 25 ist über das erste Schaltelement 23a mit einen ersten Betriebsspannungsanschluss und über das zweite Schaltelement 23b mit einem zweiten Betriebsspannungsanschluss verbindbar. Ein zweiter Anschluss des ersten Widerstands 25 ist über eines der Sensorelemente 24 und über eine Reihenschaltung, bestehend aus einem zweiten Widerstand 26 und einem Kondensator 27 mit dem ersten Betriebsspannungsanschluss verbunden.

Mit Hilfe der Schaltvorrichtungen werden die einzelnen Sensorelemente 24 wiederholt über den ersten Widerstand 25 mit einer an dem zweiten Betriebsspannungsanschluss anliegenden elektrischen Spannung $V_{CC}$ verbunden, indem das erste Schaltelement 23a und das dritte Schaltelement geöffnet und das zweite Schaltelement 23b geschlossen werden. Dadurch wird das betreffende Sensorelement 24 aufgeladen.

Danach wird das zweite Schaltelement 23b geöffnet und das dritte Schaltelement 23c geschlossen. Dadurch wird die in dem Sensorelemente 24 gespeicherte Ladung ganz oder teilweise zu dem Kondensator 27 übertragen.

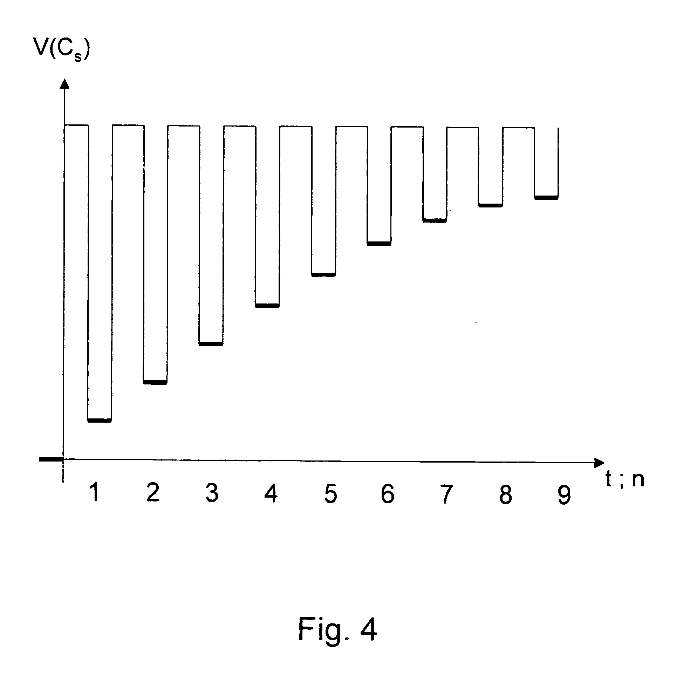

Danach werden in entsprechender Weise weitere Lade- und Entladezyklen durchgeführt. In Fig. 4 ist der Verlauf der elektrischen Spannung an einem der Sensorelemente 24 schematisch dargestellt. Deutlich ist erkennbar, dass die Spannung, die nach dem Ladungstransfer an dem Sensorelement 24 anliegt, von Zyklus zu Zyklus zunimmt. Diese Spannung entspricht etwa der an dem Kondensator 27 anliegenden Spannung und kann wie folgt berechnet werden:

$$V_{\mathrm{Re}f} = V_{CC} \cdot \left( 1 - e^{-\frac{C_S}{C_{\mathrm{Re}f}} \cdot n} \right),$$

wobei $V_{Ref}$ die Spannung am Kondensator $C_{Ref}$, Vcc das Potential am zweiten Betriebsspannungsanschluss, $C_S$ die von der Anwesenheit des als parasitäre Kapazität wirkenden Körperteils 22 abhängige Kapazität des Sensorelements, $C_{Ref}$ die Kapazität des Kondensators und n die Nummer des Zyklus bedeuten. Die Spannung $V_{Ref}$ wird über einen Messverstärker 28 an einen Messsignalausgang 29 angelegt, der zum Auswerten des Messsignals mit der Steuereinrichtung verbunden ist. Diese kann beispielsweise einen Komparator zum Vergleichen des Messsignals mit einem Referenzwert aufweisen. Wenn das Messsignal betragsmäßig größer ist als der Referenzwert, wird das Körperteil 22 detektiert. Erwähnt werden soll noch, dass die Schaltelemente 23a, 23b, 23c und/oder der Taktgeber als integrierte Schaltung in ein Halbleiterbauelement 30 integriert sein können.

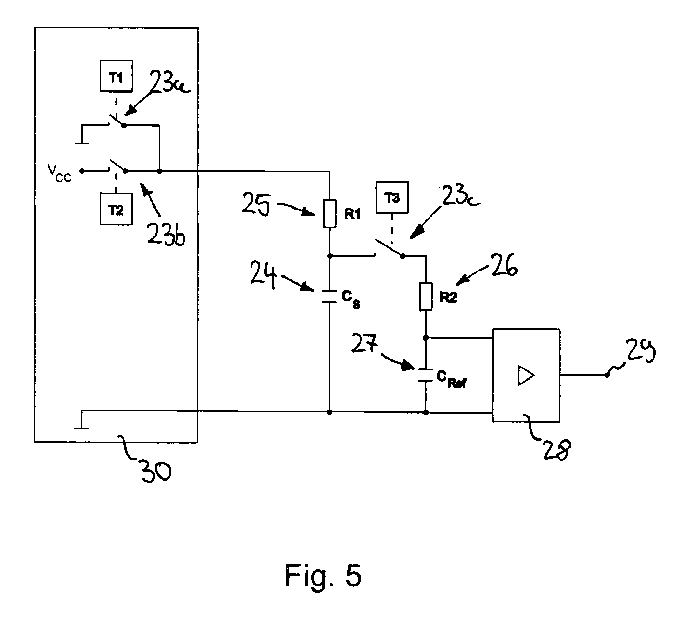

Fig. 5 zeigt ein weiteres Ausführungsbeispiel, bei dem das dritte Schaltelement 23c zwischen dem zweiten Anschluss des ersten Widerstands 25 und der Reihenschaltung, bestehend aus dem zweiten Widerstand 26 und dem Kondensator 27 angeordnet ist. Jeweils ein Anschluss des Sensorelements 24 und des Kondensators 27 sind fest mit dem ersten Betriebsspannungsanschluss verbunden. Im Übrigen entspricht die in Fig. 5 gezeigte Schaltung der in Fig. 3.

Erwähnt werden soll noch, dass zum Überwachen der Schließstellung des ersten Fahrzeugteils 2 ein Positionsgeber 31 vorgesehen ist, der bevorzugt als Schalter ausgestaltet ist. Die Steuereinrichtung 15 steht derart mit dem Positionsgeber 31 und der Betätigungseinrichtung 18 in Steuerverbindung, dass das erste Fahrzeugteil 2 geöffnet wird, wenn es sich beim Auftreten des Betätigungssteuersignals in Schließstellung befindet. Befindet sich das erste Fahrzeugteil 2 beim Auftreten des Betätigungssteuersignals nicht in Schließstellung, wird das erste Fahrzeugteil 2 geschlossen.

**Anmelder: Hella KGaA**

1 Kraftfahrzeug
2 erstes Fahrzeugteil
3 zweites Fahrzeugteil
4 Ent-/Verriegelungseinrichtung
5 Zugangsberechtigungsmittel
6 Detektionseinrichtung
7 Schalteinrichtung
8 erster Sender
9 erstes elektromagnetisches Wechselfeld
10 erster Umgebungsbereich
11 erster Empfänger
12 zweiter Sender
13 zweites elektromagnetisches Wechselfeld
14 zweiter Empfänger
15 Steuereinrichtung
16 zweiter Umgebungsbereich
17 Stelleinrichtung
18 Betätigungseinrichtung
19 Näherungssensor
20 Sensoranordnung
21 Teil des Außenbereichs
22 Körperteil
23a erstes Schaltelement
23b zweites Schaltelement
23c drittes Schaltelement
24 kapazitives Sensorelement
25 erster Widerstand
26 zweiten Widerstand
27 Kondensator
28 Messverstärker
29 Messsignalausgang
30 Halbleiterbauelement
31 Positionsgeber

**Patentansprüche**

1. Kraftfahrzeug (1) mit mindestens einem in eine Offen- und eine Schließstellung verstellbaren Fahrzeugteil (2, 3), insbesondere einer Heckklappe und/oder einer Fahrzeugtüre, mit einer Betätigungseinrichtung (18) zum automatischen Verstellen des Fahrzeugteils (2, 3) zwischen der Offen- und der Schließstellung, mit einem Näherungssensor (19), der einen Teil eines Außenbereichs (21) des Kraftfahrzeugs (1) auf die Anwesenheit eines Körperteils (22) eines Benutzers überwacht, mit einem Zugangsberechtigungsmittel (5) und einer Detektionseinrichtung (6), mittels der das Vorhandensein des Zugangsberechtigungsmittels (5) berührungslos in einem Umgebungsbereich (16) der Detektionseinrichtung (6) detektierbar ist, mit einer mit dem Näherungssensor (19), der Detektionseinrichtung (6) und der Betätigungseinrichtung (18) verbundenen Steuereinrichtung (15), die derart ausgestaltet ist, dass ein das Verstellen des Fahrzeugteils (2, 3) auslösendes Betätigungssteuersignal erzeugt wird, wenn der Näherungssensor (19) die Anwesenheit des Körperteils (22) in dem Teil des Außenbereichs (21) und die Detektionseinrichtung (6) das Vorhandensein des Zugangsberechtigungsmittels (5) in dem Umgebungsbereich (16) detektieren, wobei die Steuereinrichtung (15) mit einer Schalteinrichtung (7) zum Ein- und Ausschalten der Detektionseinrichtung (6) verbunden ist, wobei der Näherungssensor (19) zum Detektieren des Körperteils (22) mindestens ein kapazitives Sensorelement (24) aufweist, und wobei die Steuereinrichtung (15) derart mit der Schalteinrichtung (7) in Steuerverbindung steht, dass die Detektionseinrichtung (6) eingeschaltet wird, wenn der Näherungssensor (19) die Anwesenheit des Körperteils (22) in dem Teil des Außenbereichs (21) detektiert, **dadurch gekennzeichnet, dass** der Näherungssensor (19) Mittel zum Erkennen mindestens eines vorbestimmten Bewegungsablaufs oder Bewegungsprofils des Körperteils (22) und einen Speicher aufweist, dass die Detektionseinrichtung (6) eine Stelleinrichtung (17) zum Verändern der Größe des Umgebungsbereichs (16) hat, und dass die Mittel zum Erkennen des Bewegungsablaufs zum berührungslosen individuellen Einstellen der Größe des Umgebungsbereichs derart mit der Stelleinrichtung (17) in Steuerverbindung stehen, dass beim Detektieren des vorbestimmten Bewegungsablaufs oder Bewegungsprofils die Größe des Umgebungsbereichs (16) verändert wird.

2. Kraftfahrzeug (1) nach Anspruch 1, **dadurch gekennzeichnet, dass** die Steuereinrichtung (15) derart mit der Schalteinrichtung (7) in Steuerverbindung steht, dass die Detektionseinrichtung (6) ausgeschaltet wird, wenn der Näherungssensor (19) die Anwesenheit des Körperteils (22) in dem Teil des Außenbereichs (21) nicht detektiert.

3. Kraftfahrzeug (1) nach Anspruch 1 oder 2, **dadurch gekennzeichnet, dass** die Steuereinrichtung (15) derart mit der Schalteinrichtung (7) in Steuerverbindung steht, dass die Detektionseinrichtung (6) ausgeschaltet wird, wenn diese das Vorhandensein des Zugangsberechtigungsmittels (5) in dem Umgebungsbereich (16) nicht detektiert.

4. Kraftfahrzeug (1) nach einem der Ansprüche 1 bis 3, **dadurch gekennzeichnet**, die Steuereinrichtung (15) derart mit der Schalteinrichtung (7) und einem Zeitgeber in Steuerverbindung steht, dass die Detektionseinrichtung (6) nach Ablauf einer vorbestimmten maximale Einschaltzeitdauer abgeschaltet wird.

5. Kraftfahrzeug (1) nach einem der Ansprüche 1 bis 4, **dadurch gekennzeichnet, dass** der Näherungssensor (19) mindestens eine mit einem Taktgeber in Steuerverbindung stehende Schaltvorrichtung aufweist, mittels der das Sensorelement (24) wiederholt zum Aufladen auf eine vorbestimmte elektrische Spannung mit einer elektrischen Spannungsquelle und jeweils danach zum Entladen des Sensorelements mit einem Strom-Spannungskonverter verbindbar ist, dass der Strom-Spannungskonverter einen Messsignalausgang (29) zum Ausgeben eines von der im Sensorelement (24) gespeicherten Ladung abhängigen Messsignals aufweist, und dass der Messsignalausgang (29) zum Auswerten des Messsignals mit der Steuereinrichtung verbunden ist.

6. Kraftfahrzeug (1) nach einem der Ansprüche 1 bis 5, **dadurch gekennzeichnet, dass** der Strom-Spannungskonverter eine Reihenschaltung, bestehend aus einem Kondensator (27) und einem ohmschen Widerstand (26) aufweist, die mit Hilfe der Schaltvorrichtung zu dem Sensorelement (24) parallel geschaltet werden kann.

7. Kraftfahrzeug (1) nach einem der. Ansprüche 1 bis 6, **dadurch gekennzeichnet, dass** der Näherungssensor (19) mehrere voneinander beabstandete Sensorelemente (24) aufweist, mit denen jeweils das Körperteil (22) des Benutzers berührungslos detektierbar ist.

**Claims**

1. Motor vehicle (1) having at least one vehicle part (2, 3) adjustable to an open and a closed state, and particularly a tail gate and/ or a vehicle door, having an actuation device (18) for the automatic adjustment of the vehicle part (2, 3) between the open and the closed state, having a proximity sensor (19) monitoring a part of an exterior area (21) of the motor vehicle (1) for the presence of a body part (22) of a user, having an access authorization means (5) and a detection device (6) by means of which the presence of the access authorization means (5) is detectable in a contactless manner in a surrounding area (16) of the detection device (6), having a control unit (15) connected to the proximity sensor (19), to the detection device (6) and to the actuation device (18), said control unit (15) being designed to generate an actuation control signal triggering the adjustment of the vehicle part (2, 3) when the proximity sensor (19) detects the presence of the body part (22) in the part of the exterior area (21) and the detection device (6) detects the presence of the access authorization means (5) in the surrounding area (16), and wherein the control unit (15) is connected to a switching means (7) for switching the detection device (6) on and off, wherein the proximity sensor (19) has at least one capacitive sensor element (24) for the detecting of the body part (22) and wherein the control unit (15) is in control connection with a switching means (7) so that the detection device (6) is switched on when the proximity sensor (19) detects the presence of the body part (22) in the vicinity of the exterior area (21),
**characterized in that**
the proximity sensor (19) has means for the identification of at least one predetermined course of movement or movement profile of the body part (22) and a memory, and that the detection device (6) has an adjustment means (17) for the changing of the size of the surrounding area (16), and that the means for the recognition of the course of movement is connected to the adjustment means (17) in control connection for the contactless, individual adjustment of the size of the surrounding area, so that during detection of the predetermined course of movement or movement profile, the size of the surrounding area (16) is changed.

2. Motor vehicle (1) according to Claim 1, **characterized in that** the control unit (15) is in control connection with the switching means (7) so that the detection device (6) is switched off when the proximity sensor (19) does not detect the presence of the body part (22) in the part of the exterior area (21).

3. Motor vehicle (1) according to Claim 1 or Claim 2, **characterized in that** the control unit (15) is in control connection with the switching means (7) so that the detection device (6) is switched off when it does not detect the presence of the access authorization means (5) in the surrounding area (16).

4. Motor vehicle (1) according to one of the Claims 1 to 3, **characterized in that** the control unit (15) is in control connection with the switching means (7) and a timer so that the detection device (6) is switched off after the lapse of a predetermined on-time.

5. Motor vehicle (1) according to one of the Claims 1 to 4, **characterized in that** the proximity sensor (19) has at least one switching device being in control connection with a clock generator, by means of which the sensor element (24) can be repeatedly connected to an electrical voltage source for charging to a predetermined electrical voltage and subsequently connected to a current-voltage converter for the discharge of the sensor element, the current-voltage converter having a measuring signal output (29) for the release of a measuring signal depending on the load stored in the sensor element (24), and the measuring signal output (29) being connected with the control unit for the evaluation of the measuring signal.

6. Motor vehicle (1) according to one of the Claims 1 to 5, **characterized in that** the current-voltage converter has a serial connection comprising a capacitor (27) and an ohmic resistor (26), which can be switched in parallel to the sensor element (24) by means of the switching device.

7. Motor vehicle (1) according to one of the Claims 1 to 6, **characterized in that** the proximity sensor (19) has several sensor elements (24) with a distance relative to one another, by means of which the body part (22) of the user is detected contact-free.

## Revendications

1. Véhicule automobile (1) avec au moins une partie de véhicule (2, 3) réglable dans une position d'ouverture et une position de fermeture, surtout un hayon et/ou une porte de véhicule, avec un dispositif de commande (18) pour régler automatiquement la partie de véhicule (2, 3) entre la position d'ouverture et de fermeture, avec un capteur de proximité (19) qui surveille une partie de la zone extérieure (21) du véhicule automobile (1) par rapport à la présence d'une partie du corps (22) d'un utilisateur, avec un moyen de droit d'accès (5) et un dispositif de détection (6) par lequel la présence du moyen de droit d'accès (5) peut être détectée sans contact dans une zone d'environnement (16) du dispositif de détection (6), avec une installation de commande (15) reliée au capteur de proximité (19), au dispositif de détection (6), et au dispositif de commande (18), réalisée de telle manière qu'un signal de commande qui déclenche le réglage de la partie du véhicule (2, 3) soit généré lorsque le capteur de proximité (19) détecte la présence d'une partie du corps (22) dans la partie de la zone extérieure (21) et le dispositif de détection (6) détecte la présence du moyen de droit d'accès (5) dans la zone d'environnement (16), l'installation de commande (15) étant relié à un dispositif de commutation (7) pour la mise en marche et en arrêt du dispositif de détection (6), le capteur de proximité (19) pour la détection de la partie du corps (22) présentant au moins un élément de capteur capacitif (24) et l'installation de commande (15) étant en relation de commande au dispositif de commutation (7) de telle manière que le dispositif de détection (6) soit mis en marche lorsque le capteur de proximité (19) détecte la présence d'une partie de corps (22) dans la partie de la zone extérieure (21),

   **caractérisé en ce que**

   le capteur de proximité (19) présente des moyens pour reconnaître au moins un déroulement séquentiel des mouvements prédéterminé ou un profil de mouvements prédéterminé de la partie du corps (22) et une mémoire, que le dispositif de détection (6) possède un dispositif de réglage (17) pour modifier la dimension de la zone d'environnement (16) et que les moyens pour reconnaître le déroulement séquentiel des mouvements pour le réglage individuel sans contact de la dimension de la zone d'environnement sont reliés au dispositif de réglage (17) en relation de commande de telle manière que la dimension de la zone d'environnement (16) soit modifiée lors de la détection du déroulement séquentiel des mouvements prédéterminé ou du profil de mouvements prédéterminé.

2. Véhicule automobile (1) selon la revendication 1, **caractérisé en ce que** l'installation de commande (15) est en relation de commande avec le dispositif de commutation (7) de telle manière que le dispositif de détection (6) soit éteint lorsque le capteur de proximité (19) ne détecte pas la présence de la partie du corps (22) dans la partie de la zone extérieure (21).

3. Véhicule automobile (1) selon la revendication 1 ou 2, **caractérisé en ce que** l'installation de commande (15) est en relation de commande avec le dispositif de commutation (7) de telle manière que le dispositif de détection (6) soit éteint lorsqu'il ne détecte pas la présence du moyen de droit d'accès (5) dans la zone d'environnement (16).

4. Véhicule automobile (1) selon l'une des revendications 1 à 3, **caractérisé en ce que** l'installation de commande (15) est en relation de commande avec le dispositif de commutation (7) et avec une horloge de telle manière que le dispositif de détection (6) soit éteint après l'expiration d'un temps de fonctionnement maximale prédéfinie.

5. Véhicule automobile (1) selon l'une des revendications 1 à 4, **caractérisé en ce que** le capteur de proximité (19) présente au moins un dispositif de commutation en relation de commande avec une horloge avec lequel l'élément de capteur (24) peut être relié de façon répétée pour la charge à une tension électrique prédéterminée au moyen d'une source de tension électrique et après à chaque fois pour la décharge de l'élément de capteur à un convertisseur de courant/tension, que le convertisseur courant/tension présente une sortie du signal de mesure (29) pour l'émission d'un signal de mesure dépendant de la charge mémorisée à l'élément de capteur (24) et que la sortie du signal de mesure (29) est reliée à l'installation de commande pour l'exploitation du signal de mesure.

6. Véhicule automobile (1) selon l'une des revendications 1 à 5, **caractérisé en ce que** le convertisseur courant/tension présente un montage en série comprenant un condensateur (27) et une résistance idéale (26) qui peut être connecté en parallèle à l'élément de capteur (24) à l'aide du dispositif de commutation.

7. Véhicule automobile (1) selon l'une des revendications 1 à 6, **caractérisé en ce que** le capteur de proximité (19) présente plusieurs éléments de capteur (24) distants l'un de l'autre avec lesquels la partie du corps (22) de l'utilisateur est détectable sans contact.

Fig. 1

Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0999102 A2
- DE 19901364 A1
- US 20030095040 A1
- EP 0965710 A2
- DE 1020040471709 B3